# EUROPÄISCHE PATENTSCHRIFT

(11) **EP 2 503 763 B1**
(45) Veröffentlichungstag und Bekanntmachung des Hinweises auf die Patenterteilung: **24.07.2019**
(21) Anmeldenummer: 11158908.1
(22) Anmeldetag: 18.03.2011
(51) Int. Cl.: H04L 29/12, H04L 29/08

(54) **VERFAHREN ZUR VERGABE VON NETZWERKADRESSEN FÜR VENTILATOREN**
METHOD FOR ALLOCATING NETWORK ADDRESSES FOR VENTILATORS
PROCÉDÉ D'ATTRIBUTION D'ADRESSES DE RÉSEAU POUR VENTILATEURS

(43) Veröffentlichungstag der Anmeldung: 26.09.2012
(73) Patentinhaber: ebm-papst Mulfingen GmbH & Co. KG, 74673 Mulfingen (DE)
(72) Erfinder: Sauer, Thomas, 65510, Idstein (DE); Teuke, Klaus, 74677, Dörzbach (DE); Humm, Markus, 74679, Weißbach (DE)
(74) Vertreter: Staeger & Sperling Partnerschaftsgesellschaft mbB

(56) Entgegenhaltungen:
- WO-A1-2005/051723
- WO-A1-2009/010745
- DE-A1- 10 240 832

## Beschreibung

Die Erfindung betrifft ein Verfahren zur Vergabe von Netzwerkadressen für Ventilatoren in einem Netzwerk gemäß Anspruch 1.

Bei der Verwendung von einer Mehrzahl von Ventilatoren zum Beispiel zur Belüftung von Gebäuden entsteht der Bedarf, die Ventilatoren zentral zu steuern. Dazu werden die Ventilatoren über ein Netzwerk miteinander verbunden. Um die einzelnen Ventilatoren in dem Netzwerk effizient ansprechen zu können, muss jedem Ventilator eine eindeutige Adresse in dem Netzwerk zugewiesen werden.

Dazu werden in einem herkömmlichen Verfahren die Ventilatoren manuell der Reihe nach eingeschaltet, wobei jedem neu eingeschalteten Ventilator jeweils eine eindeutige Adresse zugewiesen wird, bevor der nächste Ventilator eingeschaltet werden kann. Dies wird wiederholt, bis alle im Netzwerk verbundenen Ventilatoren individuell adressierbar sind. Ein derartiges Verfahren hat den Nachteil, dass viele manuelle Schaltvorgänge an der Anlage notwendig sind, bis alle Ventilatoren über das Netzwerk von einer zentralen Steuerung individuell angesprochen werden können.

Aus der DE 10 2004 039 447 A1 ist ein Verfahren zur automatischen Adressvergabe an Teilnehmer eines Systems durch einen Master bekannt, bei dem jeder Teilnehmer einen einstellbaren Adressspeicher aufweist und über einen vorbestimmten Kanal empfangsbereit ist und wobei zu Beginn des Verfahrens jeder Teilnehmer eine Zufallsadresse auswählt. Dabei überprüft der Master für den gesamten gültigen Adressraum, ob zwei Teilnehmer zufällig die gleiche Zufallsadresse ausgewählt haben und veranlasst für diesen Fall, dass die jeweiligen Teilnehmer eine neue Zufallsadresse auswählen, wobei die vorher bereits ermittelten eindeutigen Adressen der Teilnehmer als mögliche neue Zufallsadressen ausscheiden. Dieses Verfahren hat den Nachteil, dass insbesondere bei großen Netzwerken mit vielen Teilnehmern der Adressraum sehr groß sein kann und dieses Verfahren relativ lange dauert, bis der Master den gesamten Adressraum abgefragt hat und jeder Teilnehmer eine gültige individuelle Adresse besitzt.

In der WO 2009/010745 A1 ist ein Verfahren zum Identifizieren von mehreren mittels einer Kommunikationsverbindung verbundenen Geräten beschrieben, bei dem jedes Gerät eine eindeutige Identifikationsnummer aufweist. Eine Steuerungsstation identifiziert die Geräte durch Versenden von Abfolgen von Abfragesignalen, die eine Repräsentation der Identifikationsnummern beinhalten. Eine erste Abfrage repräsentiert einen großen Bereich von Identifikationsnummern, wobei jedes Gerät, dessen Identifikationsnummer zu der Abfrage passt, auf die Abfrage mit seiner vollständigen Identifikationsnummer und einer Prüfsumme antwortet. Wenn mehrere Geräte auf eine Abfrage antworten, werden die Antworten als ungültig verworfen und die erste Abfrage wird unterbrochen und eine zweite Abfrage initiiert. Die zweite Abfrage repräsentiert einen mehr eingeschränkten Bereich von Identifikationsnummern. Weitere Abfragen werden mit immer mehr eingeschränkten Bereichen von Identifikationsnummern durchgeführt, bis nur genau ein Gerät auf eine Abfrage antwortet. Diesem Gerät wird dann eine eindeutige Identifizierung für die Kommunikationsverbindung zugewiesen und die aktuelle Abfrage beendet. Danach wird die vorher unterbrochene Abfrage fortgeführt, und dies wird wiederholt, bis kein Gerät mehr auf eine Abfrage antwortet.

Ein ähnliches Verfahren ist aus der DE 102 40 832 A1 bekannt. Dort wird ein Bus beschrieben, der sich dadurch auszeichnet, dass er im Master-Slave betrieben wird und die Adressierung der angeschlossenen Slaves anhand der Seriennummern, die die einzelnen Slaves aufweisen, durchgeführt wird. Die Adressierung wird insbesondere dadurch ausgeführt, dass ein Teilmerkmal durch den Master an den einzelnen Slaves abgefragt wird. Nur wenn ein einziger Slave auf die Frage des Masters antwortet, dann erhält der Slave eine Adresse. Antworten mehrere Slaves, dann wird die Anfrage verfeinert.

Ein weiteres Verfahren ist aus der WO 2005/051723 A1 bekannt. Auch hier führt ein Master Abfragen mittels Bereichen von Seriennummern durch. Wenn mehrere Slaves antworten, wird die Abfrage ebenfalls modifiziert, so dass die Antworten soweit eingeschränkt werden, bis genau ein Slave antwortet. Diesem Slave wird dann eine eindeutige Identifikationsnummer für die Buskommunikation zugeordnet.

Diese Verfahren haben den Nachteil, dass bei Bus-Systemen, bei denen sichergestellt wird, dass immer nur ein Gerät antworten kann, wodurch keine Kollisionen oder Fehler auf dem Bus auftreten, immer nur das erste antwortende Gerät berücksichtigt wird, und die anderen Geräte erst durch später generierte höherwertige Abfragen erkannt werden.

Der Erfindung liegt daher die Aufgabe zugrunde, ein Verfahren zur Vergabe von Netzwerkadressen für Ventilatoren zur Verfügung zu stellen, das es ermöglicht, die Netzwerkadressen automatisch und auch bei großen Netzwerken mit vielen Teilnehmern möglichst schnell den Ventilatoren zuzuweisen.

Bei einem Verfahren der eingangs beschriebenen Art wird die Aufgabe erfindungsgemäß dadurch gelöst, dass die Steuerungseinheit bei einer fehlerfrei empfangenen Antwort nach einer Zuweisung einer Netzwerkadresse mittels Adresszuweisungsbefehl die vorherige Seriennummernanfrage mit der gleichen Seriennummernmaske wiederholt, um zusätzliche Ventilatoren, dessen Seriennummer zu der Seriennummernmaske passen, zu erkennen und ihnen eindeutige Netzwerkadressen zuzuordnen. Dies ist insbesondere dann vorteilhaft, wenn das Netzwerkinterface der Ventilatoren ein Senden eines anderen Teilnehmers auf dem Bus bemerkt und deswegen seine Antwort unterdrückt, um eine Kollision zu verhindern oder wenn die komplette Antwort eines ersten Ventilators durch eine Antwort mit der größeren Signalhöhe eines anderen Ventilators überlagert wird. Durch die Wiederholung der Seriennummernanfrage wird sichergestellt, dass jede zur Seriennummernmaske passende Seriennummer erkannt wird und dem jeweiligen Ventilator eine eindeutige Netzwerkadresse zugewiesen werden kann.

Beim erfindungsgemäßen Verfahren sendet die Steuerungseinheit bei einer fehlerhaft empfangenen Antwort eine weitere Seriennummernanfrage mit einer modifizierten Seriennummernmaske an die Startadresse, wobei die Steuerungseinheit die nächste unbestimmte Stelle der Seriennummernmaske in Reihenfolge der Wertigkeit in eine bestimmte Stelle umwandelt. Dies ist vorteilhaft, da in der Regel Ventilatoren mit aufsteigenden Seriennummern produziert und ausgeliefert werden. Bei der Inbetriebnahme einer neuen Anlage mit vielen Ventilatoren werden die Seriennummern der verwendeten Ventilatoren normalerweise nahe beieinander liegen, so dass sie sich lediglich in den niederwertigen Stellen der Seriennummer unterscheiden. Dadurch, dass die niederwertigen Stellen zuerst die bestimmten Stellen sind, wird die Anzahl der möglichen Kollisionen der Antworten minimiert und möglichst schnell alle Ventilatoren anhand ihrer unterschiedlichen Seriennummern identifiziert, da in der Regel die höherwertigen Stellen zur Unterscheidung der Ventilatoren nicht geeignet sind und von den unbestimmten Stellen der Seriennummernmaske ausmaskiert werden.

Gemäß der Erfindung sendet die Steuerungseinheit bei keiner Antwort eine weitere Seriennummernanfrage mit einer modifizierten Seriennummernmaske an die Startadresse, wobei die Steuerungseinheit die hochwertigste bestimmte Stelle der Seriennummernmaske um ein Zeichen des Seriennummernalphabets erhöht und falls das letzte Zeichen im Alphabet an der hochwertigsten bestimmten Stelle der Seriennummernmaske erreicht ist und die Seriennummernmaske nicht nur eine bestimmte Stelle aufweist, die hochwertigste bestimmte Stelle der Seriennummernmaske in eine unbestimmte Stelle umwandelt.

Das hat den Vorteil, dass für die jeweilige bestimmte Stelle der Seriennummernmaske alle möglichen Seriennummernzeichen des Seriennummernalphabets abgefragt werden und, falls eine bestimmte Stelle zur weiteren Unterscheidung nicht mehr benötigt wird, wieder in eine unbestimmte Stelle in der Serienmaske umgewandelt wird, um die Anzahl der benötigten Seriennummernanfragen zu minimieren.

Weitere Einzelheiten, Merkmale und Vorteile der Erfindung ergeben sich aus den Unteransprüchen sowie aus der nachfolgenden Beschreibung der zugehörigen Zeichnungen, in der - beispielhaft - ein bevorzugtes Ausführungsbeispiel der Erfindung dargestellt ist. Es zeigen:
- Fig. 1: ein Blockschaltbild eines Ausführungsbeispiels eines erfindungsgemäßen Netzwerks mit Steuerungseinheit und Ventilatoren für ein erfindungsgemäßes Verfahren,
- Fig. 2: ein Flussdiagramm eines erfindungsgemäßen Verfahrens.

Gleiche Objekte sind in den verschiedenen Figuren mit denselben Bezugsziffern gekennzeichnet.

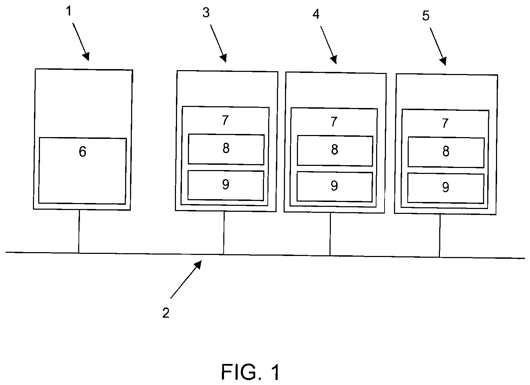

Fig.1 zeigt ein Blockdiagramm eines Netzwerks mit einer erfindungsgemäßen Steuerungseinheit 1, einer Netzwerkverbindung 2 und mehreren erfindungsgemäßen Ventilatoren 3, 4, 5. Das Netzwerk ist insbesondere ein serielles Netzwerk mit Master-Slave-Kommunikation, wie zum Beispiel ein RS485 Bus-System. Die Steuerungseinheit 1 ist insbesondere als Master mit dem Netzwerk über ein Netzwerkinterface verbunden und sendet Befehle und/oder Anfragen an die Ventilatoren 3, 4, 5. Außerdem weist die Steuerungseinheit 1 einen Speicher 6 auf, in der sie Seriennummern und den Seriennummern zugeordnete Netzwerkadressen von den einzelnen Ventilatoren speichern kann. Des Weiteren hat die Steuerungseinheit einen nicht dargestellten Speicher für eine Seriennummernmaske. Die Ventilatoren sind insbesondere als Slaves mit dem Netzwerk verbunden und weisen jeweils eine Steuerung 7 auf, welche die Befehle und/oder Anfragen der Steuerungseinheit 1 über ein Netzwerkinterface empfängt und Antworten auf die Anfragen sendet. Die Steuerungen 7 weist einen Seriennummernspeicher 8, der von der Steuerung 7 ausgelesen werden kann und einen Netzwerkadressspeicher 9 auf, der von der Steuerung 7 ausgelesen und beschrieben werden kann.

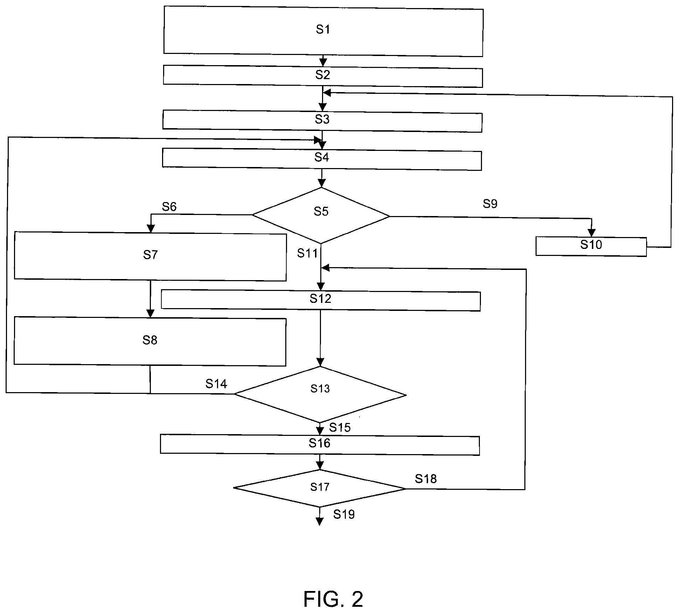

Fig. 2 zeigt ein Flussdiagramm eines Ausführungsbeispiels eines erfindungsgemäßen Verfahrens für die Vergabe von Netzwerkadressen für Ventilatoren. Das Flussdiagramm stellt den Ablauf des Verfahrens aus der Sicht einer Steuerungseinheit 1 dar, welche als Master im Netzwerk agiert.

Dem erfindungsgemäßen Verfahren ist zugrunde gelegt, dass jedem Ventilator bei der Produktion eine eindeutige Seriennummer, bestehend aus N Stellen eines vom Hersteller definierten Seriennummernalphabetes zugewiesen und in dem Seriennummernspeicher 8 gespeichert wurde. Ein mögliches Seriennummernalphabet besteht beispielweise aus den Zahlen 0 bis 9, es könnte jedoch auch aus zusätzlichen Buchstaben oder beliebigen anderen Zeichen bestehen.

In dem Ausführungsbeispiel des erfindungsgemäßen Verfahrens wird im Schritt S1 mittels eines Adresseninitialisierungsbefehls jedem Ventilator die gleiche Startadresse als Netzwerkadresse von der Steuerungseinheit 1 zugewiesen, so dass alle Ventilatoren 3, 4, 5 eine einheitliche Netzwerkadresse, zum Beispiel die erste mögliche Adresse 1 im Adressraum, zu Beginn des Verfahrens aufweisen. Dadurch können Anfragen der Steuerungseinheit 1 über die Startadresse an alle Ventilatoren 3, 4, 5 gleichzeitig gesendet werden. Der Adressinitialisierungsbefehl erfolgt in dem Ausführungsbeispiel über eine vom Netzwerk zur Verfügung gestellte spezielle Broadcastadresse, zum Beispiel die Adresse 0, mittels der alle Ventilatoren im Netzwerk gleichzeitig angesprochen werden können. Auf eine derartige Broadcastadresse wird in der Regel nicht geantwortet, was in diesem Fall auch nicht erforderlich ist. Der Zuweisungsbefehl enthält die von der Steuerungseinheit 1 gewählte Startadresse und wird von jedem Ventilator 3, 4, 5 über den Broadcast empfangen, wobei die Steuerung 7 des Ventilators 3, 4, 5 die Startadresse aus dem Adresseninitialisierungsbefehl ausliest und in seinen Netzwerkadressspeicher 9 schreibt. Alternativ kann auch bei der Herstellung der Ventilatoren 3, 4, 5 allen Ventilatoren 3, 4, 5 eine identische Startadresse als Netzwerkadresse in den Netzwerkadressspeicher 9 zugewiesen werden, so dass sich in diesem Fall das erfindungsgemäße Verfahren in zwei Verfahrensabschnitten, der erste bei der Herstellung und der zweite bei Inbetriebnahme, durchgeführt wird.

Danach wird in der Steuerungseinheit 1 eine Seriennummernmaske initialisiert. Die Seriennummernmaske hat die gleiche Anzahl von Stellen wie eine Seriennummer und besteht aus bestimmten und unbestimmten Stellen. Den unbestimmten Stellen der Seriennummernmaske wird ein Jokerzeichen zugewiesen. Das Jokerzeichen ist ein Zeichen außerhalb des Seriennummernalphabets und steht als Platzhalter für ein beliebiges Zeichen im Seriennummernalphabet. Den bestimmten Stellen wird ein Zeichen des Seriennummernalphabets zugewiesen. Zur Initialisierung werden zunächst in dem Schritt S2 alle Stellen der Seriennummernmaske auf Jokerzeichen gesetzt und eine aktuelle zu verändernde bestimmte Stelle, zum Beispiel die erste Stelle der Seriennummernmaske, ausgewählt. Alternativ könnte das Verfahren jedoch auch rückwärts anfangen und die letzte Stelle der Seriennummernmaske als aktuelle zu verändernde bestimmte Stelle wählen. Im Schritt S3 wird der aktuellen zu verändernden bestimmten Stelle der Seriennummernmaske ein Startzeichen, zum Beispiel das erste mögliche Zeichen im Seriennummernalphabet, zugewiesen. Alternativ könnte das Verfahren jedoch auch hier rückwärts anfangen und das letzte Zeichen des Seriennummernalphabets als Startzeichen wählen. Damit besteht die Seriennummernmaske zunächst aus einem bestimmten Zeichen an der aktuellen zu verändernden bestimmten Stelle und unbestimmten Stellen mit Jokerzeichen an allen anderen Stellen.

Im nächsten Schritt S4 sendet die Steuerungseinheit 1 an die Startadresse eine Seriennummernanfrage. Die Seriennummernanfrage beinhaltet die aktuelle Seriennummernmaske. Die Steuerung 7 der Ventilatoren 3, 4, 5 empfängt die Seriennummernanfrage und vergleicht die Seriennummernmaske mit der intern im Seriennummernspeicher 8 festgelegten individuellen Seriennummer. Die Ziffernstellen, welche ein Jokerzeichen beinhalten, werden dabei nicht beachtet. Der Ventilator 3, 4, 5, dessen Seriennummer an den bestimmten Ziffernstellen der Seriennummernmaske das gleiche Zeichen aufweist wie die Seriennummernmaske, antwortet auf die Seriennummernanfrage mittels einer Seriennummernbestätigung. In der Seriennummernbestätigung sendet er seine vollständige Seriennummer an die Steuerungseinheit 1 zurück.

Mit Schritt S5 des Verfahrens wartet die Steuerungseinheit 1 auf eine Antwort, d. h. eine Seriennummernbestätigung. Auf jede Seriennummernanfrage der Steuerungseinheit 1 gibt es drei mögliche Antwortszenarien, nämlich eine fehlerfreie Antwort, eine fehlerhafte Antwort oder keine Antwort.

Die erste Möglichkeit S6 ist, dass genau ein Ventilator 3, 4, 5 antwortet. In diesem Fall empfängt die Steuerungseinheit 1 die Antwort als eine fehlerfreie Seriennummernbestätigung und speichert im Schritt S8 die empfangene Seriennummer in der Speicher 6 zusammen mit der nächsten zuzuweisenden Netzwerkadresse ab, wobei die nächste zuzuweisende Netzwerkadresse zum Beispiel durch ein Inkrementieren der Netzwerkadresse angefangen bei der Startadresse ermittelt wird. Danach sendet die Steuerungseinheit im Schritt S8 einen Adresszuweisungsbefehl. Der Adresszuweisungsbefehl wird an die Startadresse gesendet und enthält die vorher berechnete zuzuweisende Netzwerkadresse und die vollständige vorher empfangene Seriennummer des antwortenden Ventilators 3, 4, 5. Alternativ könnte der Netzwerkadressenzuweisungsbefehl auch als Broadcast gesendet werden. Die Steuerungen der Ventilatoren 3, 4, 5 empfangen den Adresszuweisungsbefehl und vergleichen die darin enthaltene Seriennummer mit der eigenen, im Seriennummernspeicher 8 festgelegten Seriennummer. Stimmen diese überein, so schreibt die Steuerung 7 des entsprechenden Ventilators 3, 4, 5 die empfangene Netzwerkadresse in seinen Netzwerkadressspeicher 9, so dass er nunmehr eine eindeutige Netzwerkadresse besitzt, auf der er individuell Steuerungsdaten empfangen kann. Dies bedeutet auch, dass er nicht mehr weitere Seriennummernanfragen der Steuerungseinheit 1 empfängt. Daraufhin wird zurück zu Schritt S4 gesprungen und die gleiche Seriennummernanfrage mit der gleichen Seriennummernmaske von der Steuerungseinheit 1 ein weiteres Mal gesendet. Dies ermöglicht es, die Antwort eines weiteren Ventilators 3, 4, 5 zu empfangen, dessen Seriennummer ebenfalls zu der aktuellen Seriennummernmaske passte und der unter Umständen zeitversetzt antwortete, beziehungsweise der darauf gewartet hat, dass er kollisionsfrei senden konnte. Dies wird rekursiv wiederholt, bis kein Ventilator 3, 4, 5 mehr in einem bestimmten Zeitraum antwortet, wonach zu Schritt S12 gesprungen wird.

Die zweite Möglichkeit S9 ist, dass mehrere Ventilatoren 3, 4, 5 gleichzeitig antworten, da ihre beiden Seriennummern zu der Seriennummernmaske in den bestimmten Stellen übereinstimmen. In diesem Fall findet im Netzwerk eine Kollision von Antworten statt, die von der Steuerungseinheit 1 als Fehler erkannt wird. Daraufhin reagiert die Steuerungseinheit 1 mit einer zusätzlichen Seriennummernanfrage, bei der eine neue Seriennummernmaske mit einer zusätzlichen bestimmten Stelle verwendet wird. Dazu wird im Schritt S10 die aktuell zu verändernde bestimmte Stelle um eine Stelle erhöht, d. h. zur nächst höherwertigen Stelle verschoben, so dass ein Jokerzeichen dann durch ein zusätzliches bestimmtes Zeichen ersetzt wird, wobei die vorherige aktuell zu verändernde bestimmte Stelle mit dem alten bestimmten Zeichen belegt bleibt. Danach wird zu dem Schritt S3 zurückgesprungen, so dass der neuen aktuell zu verändernden bestimmten Stelle der Startwert zugewiesen wird. Dies würde so lange wiederholt werden, bis alle Stellen in der Seriennummernmaske bestimmte Stellen sind und somit nur genau ein Ventilator antworten kann. Da jedoch die Ventilatoren in der Regel mit aufsteigenden Seriennummern ausgeliefert werden, ist es relativ unwahrscheinlich, dass die Seriennummernmaske sehr viele bestimmte Stellen aufweisen muss, um nur eine oder keine Antwort zu erhalten. Wahrscheinlicher ist, dass sich die Seriennummern der Ventilatoren in den ersten Stellen unterscheiden und in den übrigen Stellen übereinstimmen, so dass viele bestimmte Stellen nur selten verwendet werden müssen.

Die dritte Möglichkeit S11 ist, dass keiner der Ventilatoren 3, 4, 5 antwortet, da keine der Seriennummern der Ventilatoren 3, 4, 5 zu der aktuellen Seriennummernmaske passt. In diesem Fall wird in Schritt S12 die Seriennummernmaske derart verändert, dass die aktuell zu verändernde bestimmte Stelle auf das nächste gültige Seriennummernzeichen im Seriennummernalphabet gesetzt wird. Im Schritt S13 wird geprüft, ob bereits das Ende des Seriennummernalphabets erreicht ist. Falls das Ende des Seriennummernalphabets nicht erreicht ist, was dem Pfad S14 im Flussdiagramm entspricht, so wird zum Schritt S4 zurückgesprungen und eine neue Seriennummernanfrage mit der neu berechneten Seriennummernmaske gesendet. Falls das Ende des Seriennummernalphabets erreicht ist, was dem Pfad S15 im Flussdiagramm entspricht, so wird im Schritt S16 die aktuell zu verändernde bestimmte Stelle durch ein Jokerzeichen wieder zurück zu einer unbestimmten Stelle gemacht und die aktuelle zu verändernde bestimmte Stelle um eine Stelle reduziert, d. h. zur nächst niedrigerwertigen Stelle verschoben. Darauf folgend wird im Schritt S17 geprüft, ob die letzte aktuell zu verändernde Stelle die erste Stelle war. War es nicht die erste Stelle, was dem Pfad S18 im Flussdiagramm entspricht, so wird zurück zum Schritt S12 gesprungen, so dass der neuen aktuell zu verändernden bestimmten Stelle der Seriennummernmaske das nächste Zeichen zugeordnet wird und wie oben beschrieben weiter verfahren wird. War die letzte aktuell zu verändernde bestimmte Stelle die erste Stelle der Serienmaske, was dem Pfad 19 im Flussdiagramm entspricht, so sind alle benötigten Werte der Seriennummernmaske abgefragt und allen Ventilatoren eine eindeutige Netzwerkadresse zugewiesen worden und das Verfahren wird beendet.

Anhand der folgenden Tabelle soll der Ablauf eines Beispiels mit drei Ventilatoren V1 mit der Seriennummer SN1 = 211, V2 mit der Seriennummer SN2 = 218 und V3 mit der SN3 = 221 veranschaulicht werden.

| **#** | **SNM** | **S** | **Antwort** | **V1** | **V2** | **V3** |
|---|---|---|---|---|---|---|
| S1 | - | - | - | 1 | 1 | 1 |
| S2, S3, S4, S5 | **1 | 1 | ERROR | 1 | 1 | 1 |
| S9, S10, S3, S4, S5 | *11 | 2 | 211 | 1 | 1 | 1 |
| S6, S7, S8 | *11 | 2 | - | 2 | 1 | 1 |
| S4, S5 | *11 | 2 | TIMEOUT | 2 | 1 | 1 |
| S11, S12, S13, S4, S5 | *21 | 2 | 221 | 2 | 1 | 1 |
| S6, S7, S8 | *21 | 2 | - | 2 | 1 | 3 |
| S4, S5 | *21 | 2 | TIMEOUT | 2 | 1 | 3 |
| S11, S12, S13, S4, S5 | *31 | 2 | TIMEOUT | 2 | 1 | 3 |
| S11, S12, S13, S4, S5 | *41 | 2 | TIMEOUT | 2 | 1 | 3 |
| ... | ... | ... | ... | ... | ... | ... |
| S11, S12, S13, S4, S5 | *91 | 2 | TIMEOUT | 2 | 1 | 3 |
| S11, S12, S13, S15, S16, S17, S12, S13, S14, S4 | **2 | 1 | TIMEOUT | 2 | 1 | 3 |
| S11, S12, S13, S4, S5 | **3 | 1 | TIMEOUT | 2 | 1 | 3 |
| ... | ... | ... | ... | ... | ... | ... |
| S11, S12, S13, S4, S5 | **8 | 1 | 218 | 2 | 1 | 3 |
| S6, S7, S8 | **8 | 1 | - | 2 | 4 | 3 |
| S4, S5 | **8 | 1 | TIMEOUT | 2 | 4 | 3 |
| S11, S12, S13, S4, S5 | **9 | 1 | TIMEOUT | 2 | 4 | 3 |

In der ersten Spalte # sind die Verfahrensschritte pro Spalte in Reihenfolge angegeben, die zu den Werten in den anderen Spalten führen. In der zweiten Spalte ist die aktuelle Seriennummernmaske SNM angegeben, wobei das Symbol "*" für ein Jokerzeichen an einer unbestimmten Stelle und eine Ziffer für ein Seriennummernzeichen an einer bestimmten Stelle steht. In der dritten Spalte ist die aktuell zu verändernde bestimmte Stelle S angegeben. In der vierten Spalte ist die Antwort der Ventilatoren, beziehungsweise der Status der Antwort in der Steuerungseinheit 1 angegeben, wobei TIMEOUT bedeutet, dass keine Antwort empfangen wurde und ERROR bedeutet, dass eine fehlerhafte Antwort durch Kollision empfangen wurde. Die letzten drei Spalten zeigen die Netzwerkadressen der drei Ventilatoren V1, V2, V3.

In einer weiteren nicht dargestellten Ausführungsform des Verfahrens schließen sich noch weitere Verfahrensschritte an, durch die die vergebenen Netzwerkadressen der Ventilatoren in Reihenfolge der Seriennummern sortiert und in dieser Reihenfolge durch eine Reihe von Adresszuweisungsbefehlen wie im Schritt S8 beschrieben neu vergeben werden. Dies hat den Vorteil, dass bei einer vorgegebenen räumlichen Anordnung der Ventilatoren in Reihenfolge der Seriennummern, die Netzwerkadressen von einem Servicetechniker ohne zusätzliche technische Hilfsmittel nur anhand der räumlichen Anordnung bestimmt werden können.

Die Erfindung ist durch die unabhängigen Ansprüche definiert.

## Patentansprüche

1. Verfahren zur Vergabe von Netzwerkadressen für Ventilatoren (3, 4, 5) in einem Netzwerk, wobei jeder Ventilator (3, 4, 5) eine eindeutige Seriennummer in einem Seriennummernspeicher (8) und eine Netzwerkadresse in einem einstellbaren Netzwerkadressspeicher (9) aufweist, und wobei eine Steuerungseinheit (1) mehreren Ventilatoren (3, 4, 5) automatisch Netzwerkadressen zuweist, wobei allen Ventilatoren zu Beginn eine identische Startadresse als Netzwerkadresse zugewiesen wird und an die Startadresse Seriennummernanfragen mit einer Seriennummernmaske gesendet werden, wobei die Seriennummernmaske aus Zeichen des Seriennummernalphabets als bestimmte Stellen und aus Jokerzeichen als unbestimmte Stellen besteht, und die Ventilatoren (3, 4, 5) auf die Seriennummernmaske abhängig von ihrer Seriennummer antworten, wobei die Steuerungseinheit (1) abhängig von den Antworten den Ventilatoren (3, 4, 5) eindeutige Netzwerkadressen zuweist und/oder die Seriennummernmaske für weitere Seriennummernanfragen modifiziert, wobei die Steuerungseinheit (1) bei einer fehlerfrei empfangenen Antwort, nämlich wenn genau ein Ventilator (3, 4, 5) antwortet, dem Ventilator (3, 4, 5) mittels eines Adresszuweisungsbefehls anhand der empfangenen Seriennummer eine eindeutige Netzwerkadresse zuweist,
bei einer fehlerhaft empfangenen Antwort, nämlich wenn mehrere Ventilatoren (3, 4, 5) gleichzeitig antworten, eine weitere Seriennummernanfrage mit einer modifizierten Seriennummernmaske an die Startadresse sendet, wobei die Steuerungseinheit (1) die nächste mit einem Jokerzeichen versehene unbestimmte Stelle der Seriennummernmaske in Reihenfolge der Wertigkeit in eine mit einem Zeichen des Seriennummernalphabetes versehene bestimmte Stelle umwandelt,
bei keiner Antwort eine weitere Seriennummernanfrage mit einer modifizierten Seriennummernmaske an die Startadresse sendet, und, falls das letzte Zeichen im Seriennummernalphabet an der hochwertigsten, mit einem Zeichen des Seriennummernalphabetes versehenen bestimmten Stelle der Seriennummernmaske erreicht ist, und die Seriennummernmaske nur eine mit einem Zeichen des Seriennummernalphabetes versehene bestimmte Stelle aufweist, das Verfahren beendet, wobei die Steuerungseinheit (1) bei einer fehlerfrei empfangenen Antwort nach einer Zuweisung einer Netzwerkadresse mittels Adresszuweisungsbefehl die vorherige Seriennummernanfrage mit der gleichen Seriennummernmaske wiederholt, um zusätzliche Ventilatoren (3, 4, 5), dessen Seriennummer zu der Seriennummernmaske passen, zu erkennen und ihnen eindeutige Netzwerkadressen zuzuordnen und wobei jeder Ventilator (3, 4, 5), dessen Seriennummer mit den mit einem Zeichen des Seriennummernalphabetes versehenen bestimmten Stellen der Seriennummernmaske der Seriennummernanfrage an den gleichen Stellen übereinstimmt, auf die Seriennummernanfrage mit seiner vollständigen Seriennummer antwortet und wobei die Steuerungseinheit (1) bei keiner Antwort die hochwertigste, mit einem Zeichen des Seriennummernalphabetes versehene bestimmte Stelle der Seriennummernmaske um ein Zeichen des Seriennummernalphabets erhöht.

2. Verfahren nach Anspruch 1, **dadurch gekennzeichnet, dass** die Steuerungseinheit (1), falls das letzte Zeichen im Seriennummernalphabet an der hochwertigsten, eine mit einem Zeichen des Seriennummernalphabetes versehene bestimmten Stelle der Seriennummernmaske erreicht ist und die Seriennummernmaske nicht nur eine mit einem Zeichen des Seriennummernalphabetes versehene bestimmte Stelle aufweist, die hochwertigste, mit einem Zeichen des Seriennummernalphabetes versehene bestimmte Stelle der Seriennummernmaske in ein Jokerzeichen und damit in eine unbestimmte Stelle umwandelt.

3. Verfahren nach einem der Ansprüche 1 bis 2, **dadurch gekennzeichnet, dass** eine Steuerung (7) der Ventilatoren (3, 4, 5) auf eine Seriennummernanfrage der Steuerungseinheit (1) die in der Seriennummernanfrage enthaltene Seriennummernmaske mit der in dem Seriennummernspeicher (8) gespeicherten Seriennummer des Ventilators (3, 4, 5) stellenweise vergleicht und, falls alle mit einem Zeichen des Seriennummernalphabetes versehenen bestimmten Stellen der Seriennummernmaske mit der Seriennummer übereinstimmen, die Seriennummer als Antwort an die Steuerungseinheit (1) sendet.

4. Verfahren nach einem der Ansprüche 1 bis 3, **dadurch gekennzeichnet, dass** die Steuerung (7) der Ventilatoren (3, 4, 5) auf einen Adresszuweisungsbefehl der Steuerungseinheit (1) die in dem Adresszuweisungsbefehl enthaltene Seriennummernmaske ausliest und mit der Seriennummer in dem Seriennummernspeicher (8) stellenweise vergleicht und, falls alle mit einem Zeichen des Seriennummernalphabetes versehenen bestimmten Stellen der Seriennummernmaske mit der Seriennummer Übereinstimmen, eine in dem Adresszuweisungsbefehl enthaltene Netzwerkadresse in einen Netzwerkadressspeicher (9) schreibt.

5. Verfahren nach einem der Ansprüche 1 bis 4, **dadurch gekennzeichnet, dass** die Steuerungseinheit (1) zu Beginn allen Ventilatoren (3, 4, 5) eine identische Startadresse als Netzwerkadresse zuweist.

6. Verfahren nach einem der Ansprüche 1 bis 5, **dadurch gekennzeichnet, dass** bei der Herstellung der Ventilatoren (3, 4, 5) allen Ventilatoren (3, 4, 5) eine identische Startadresse als Netzwerkadresse in den Netzwerkadressspeicher (9) zugewiesen wird.

7. Steuerungseinheit (1) zur Verwendung bei einem Verfahren gemäß Anspruch 1, **gekennzeichnet durch** die Merkmale nach einem oder mehreren der Ansprüche 1 bis 6.

## Claims

1. Method for assigning network addresses for fans (3, 4, 5) in a network, each fan (3, 4, 5) having a unique serial number in a serial number memory (8) and a network address in an adjustable network address memory (9), and wherein a control unit (1) automatically assigns network addresses to a plurality of fans (3, 4, 5), wherein an identical start address is initially assigned as the network address to all fans and serial number requests with a serial number mask are sent to the start address, wherein the serial number mask consists of characters of the serial number alphabet as specific characters and wildcards as indeterminate characters, and the fans (3, 4, 5) respond to the serial number mask depending on their serial number, wherein the control unit (1) assigns unique network addresses to the fans (3, 4, 5) depending on the responses and/or modifies the serial number mask for further serial number requests, the control unit (1) assigning a unique network address to the fan (3, 4, 5) by means of an address assignment command on the basis of the received serial number when an error-free response is received, namely when exactly one fan (3, 4, 5) responds,
in the case of an incorrectly received response, namely if a plurality of fans (3, 4, 5) respond simultaneously, sends a further serial number request with a modified serial number mask to the start address, the control unit (1) converting the next undetermined character of the serial number mask provided with a wildcard character into a determined character provided with a character of the serial number alphabet in order of value,
when there is no response, sends a further serial number request with a modified serial number mask to the start address, and, if the last character in the serial number alphabet is reached at the most valuable specific position of the serial number mask provided with a character of the serial number alphabet, and the serial number mask has only one specific position provided with a character of the serial number alphabet, terminates the method,
wherein the control unit (1) repeats the previous serial number request with the same serial number mask in order to recognize additional fans (3, 4, 5) matching in its serial number to the serial number mask, and assign unique network addresses to them when an error-free response is received after an assignment of a network address by means of an address assignment command, and wherein
each fan (3, 4, 5) corresponding in its serial number to the specific characters of the serial number mask of the serial number request provided with a character of the serial number alphabet in the same locations, responds to the serial number request with its complete serial number and wherein
the control unit (1) increases the most valuable specific position of the serial number mask provided with a character of the serial number alphabet by a character of the serial number alphabet at no response.

2. Method according to claim 1, **characterized in that** the control unit (1), if the last character in the serial number alphabet is reached at the most valuable position of the serial number mask provided with a character of the serial number alphabet and the serial number mask does not only have a specific position provided with a character of the serial number alphabet, converts the most valuable specific position of the serial number mask provided with a character of the serial number alphabet into a wildcard and thus into an indeterminate position.

3. Method according to one of the claims 1 to 2, **characterized in that** a controller (7) of the fans (3, 4, 5) compares the serial number mask contained in the serial number request with the serial number of the fan (3, 4, 5) stored in the serial number memory (8) character by character and, if all specific digits of the serial number mask provided with a character of the serial number alphabet match the serial number, sends the serial number to the control unit (1) as a response.

4. Method according to one of the claims 1 to 3, **characterized in that** the controller (7) of the fans (3, 4, 5), in response to an address assignment command of the control unit (1), reads out the serial number mask contained in the address assignment command and compares the serial number character by character with the serial number character in the serial number memory (8) and, if all specific characters of the serial number mask marked with a character of the serial number alphabet match the serial number, writes a network address contained in the address assignment command to a network address memory (9).

5. Method according to one of the claims 1 to 4, **characterized in that** the control unit (1) initially assigns all the fans (3, 4, 5) an identical start address as the network address.

6. Method according to one of claims 1 to 5, **characterized in that**, during the manufacture of the fans (3, 4, 5), all the fans (3, 4, 5) are assigned with an identical start address as the network address in the network address memory (9).

7. Control unit (1) for use in a method according to claim 1 **characterized by** the features according to one or more of the claims 1 to 6.

## Revendications

1. Procédé d'attribution d'adresses de réseau pour ventilateurs (3, 4, 5) dans un réseau, dans lequel chaque ventilateur (3, 4, 5) présente un numéro de série unique dans une mémoire de numéros de série (8) et une adresse de réseau dans une mémoire d'adresses de réseau réglable (9), et dans lequel une unité de commande (1) affecte automatiquement des adresses de réseau à plusieurs ventilateurs (3, 4, 5), dans lequel une adresse de départ identique est affectée en tant qu'adresse de réseau à tous les ventilateurs au début et des demandes de numéro de série sont envoyées à l'adresse de départ avec un masque de numéro de série, dans lequel le masque de numéro de série se compose de caractères de l'alphabet de numéro de série en tant que positions déterminées et de caractères joker en tant que positions indéterminées, et les ventilateurs (3, 4, 5) répondent au masque de numéro de série en fonction de leur numéro de série, dans lequel l'unité de commande (1) affecte des adresses de réseau uniques aux ventilateurs (3, 4, 5) en fonction des répondes et/ou modifie le masque de numéro de série pour d'autres demandes de numéro de série, dans lequel l'unité de commande (1), dans le cas d'une réponse reçue sans erreur, à savoir lorsque exactement un ventilateur (3, 4, 5) répond, affecte une adresse de réseau unique au ventilateur (3, 4, 5) au moyen d'un ordre d'affectation d'adresse à l'aide du numéro de série reçu, dans le cas d'une réponse reçue erronée, à savoir lorsque plusieurs ventilateurs (3, 4, 5) répondent en même temps, envoie une autre demande de numéro de série avec un masque de numéro de série modifié à l'adresse de départ, dans lequel l'unité de commande (1) convertit la prochaine position indéterminée dotée d'un caractère joker du masque de numéro de série par ordre de valeur en une position déterminée dotée d'un caractère de l'alphabet de numéro de série, en cas d'absence de réponse, envoie une autre demande de numéro de série avec un masque de numéro de série modifié à l'adresse de départ, et, si le dernier caractère dans l'alphabet de numéro de série est atteint à la position déterminée du masque de numéro de série à valeur la plus élevée dotée d'un caractère de l'alphabet de numéro de série, et le masque de numéro de série présente uniquement une position déterminée dotée d'un caractère de l'alphabet de numéro de série, termine le procédé, dans lequel l'unité de commande (1) dans le cas d'une réponse reçue sans erreur après une affectation d'une adresse de réseau au moyen d'un ordre d'affection d'adresse répète la demande de numéro de série précédente avec le même masque de numéro de série afin de détecter des ventilateurs supplémentaires (3, 4, 5), dont le numéro de série correspond au masque de numéro de série, et leur associer des adresses de réseau uniques et dans lequel chaque ventilateur (3, 4 5), dont le numéro de série coïncide avec les positions déterminées dotées d'un caractère de l'alphabet de numéro de série du masque de numéro de série de la demande de numéro de série aux mêmes positions, répond à la demande de numéro de série avec son numéro de série complet et dans lequel l'unité de commande (1) en cas d'absence de réponse augmente d'un caractère de l'alphabet de numéro de série la position déterminée du masque de numéro de série à valeur la plus élevée dotée d'un caractère de l'alphabet de numéro de série.

2. Procédé selon la revendication 1, **caractérisé en ce que** l'unité de commande (1), si le dernier caractère dans l'alphabet de numéro de série est atteint à la position déterminée du masque de numéro de série à valeur la plus élevée dotée d'un caractère de l'alphabet de numéro de série et le masque de numéro de série ne présente pas seulement une position déterminée dotée d'un caractère de l'alphabet de numéro de série, convertit la position déterminée du masque de numéro de série à valeur la plus élevée dotée d'un caractère de l'alphabet de numéro de série en un caractère joker et ainsi en une position indéterminée.

3. Procédé selon l'une quelconque des revendications 1 à 2, **caractérisé en ce qu'**une commande (7) des ventilateurs (3, 4, 5) compare par position sur une demande de numéro de série de l'unité de commande (1) le masque de numéro de série contenu dans la demande de numéro de série avec le numéro de série enregistré dans la mémoire de numéros de série (8) du ventilateur (3, 4, 5) et, si toutes les positions déterminées dotées d'un caractère de l'alphabet de numéro de série du masque de numéro de série coïncident avec le numéro de série, envoie le numéro de série en tant que réponse à l'unité de commande (1).

4. Procédé selon l'une quelconque des revendications 1 à 3, **caractérisé en ce que** la commande (7) des ventilateurs (3, 4, 5) lit sur un ordre d'affectation d'adresse de l'unité de commande (1) le masque de numéro de série contenu dans l'ordre d'affectation d'adresse et le compare par position avec le numéro de série dans la mémoire de numéros de série (8) et, si toutes les positions déterminées dotées d'un caractère de l'alphabet de numéro de série du masque de numéro de série coïncident avec le numéro de série, écrit une adresse de réseau contenue dans l'ordre d'affectation d'adresse dans une mémoire d'adresses de réseau (9).

5. Procédé selon l'une quelconque des revendications 1 à 4, **caractérisé en ce que** l'unité de commande (1) affecte au début une adresse de départ identique en tant qu'adresse de réseau à tous les ventilateurs (3, 4, 5).

6. Procédé selon l'une quelconque des revendications 1 à 5, **caractérisé en ce que** lors de la fabrication des ventilateurs (3, 4, 5), une adresse de départ identique est affectée à tous les ventilateurs (3, 4, 5) en tant qu'adresse de réseau dans la mémoire d'adresses de réseau (9).

7. Unité de commande (1) à utiliser lors d'un procédé selon la revendication 1, **caractérisé par** les caractéristiques selon une ou plusieurs des revendications 1 à 6.
